Europäisches Patentamt

**European Patent Office**

Office européen des brevets

(11) Publication number: **0 134 639**
**A2**

(12) # EUROPEAN PATENT APPLICATION

(21) Application number: **84304432.2**

(22) Date of filing: **28.06.84**

(51) Int. Cl.⁴: **A 47 F 5/13**
**A 47 B 47/02, F 16 B 12/38**

(30) Priority: **08.07.83 US 512285**
**26.01.84 US 573989**

(43) Date of publication of application:
**20.03.85 Bulletin 85/12**

(84) Designated Contracting States:
**AT BE CH DE FR GB IT LI LU NL SE**

(71) Applicant: **Bisk, Leonard**
**7833 Spring Avenue**
**Elkins Park Pennsylvania 19117(US)**

(72) Inventor: **Bisk, Leonard**
**7833 Spring Avenue**
**Elkins Park Pennsylvania 19117(US)**

(74) Representative: **Shaw, Laurence**
**George House George Road**
**Edgbaston Birmingham B15 1PG(GB)**

(54) **Knock down containers.**

(57) A container in knock down form is especially easy to assemble, dismantle and reassemble, comprises a kit of panels (P) and clips (C), the panels having marginal rods (R) and the clips (C) being of generally E form and having two channels (11) each to receive a margin (R). Preferably the containers are suspended from a rod (10) e.g. a coat hanger rail. A range of brackets B1, B2, B3, B4, B5 to secure the container parts together or to a support is also disclosed.

FIG.2

EP 0 134 639 A2

Croydon Printing Company Ltd

## KNOCK DOWN CONTAINERS

The invention relates to knock down containers for storing or transporting items such as clothes, housewares, tools, vegetable produce, etc. It is well known that one can buy so-called knock down furniture comprising a kit of parts which are assembled by user to form a predetermined storage container or display unit, see e.g. U.S. patents 1648025A, 3208406A and 3693808A.

A difficulty with known containers is that because the components are arranged to interengage in a predetermined way only, the user cannot easily use the components to assemble a container of a different configuration. Also, very often the components must be engaged using tools. In general, the known containers must be stood on a support, e.g. connected to a bracket on the floor. It is one object of this invention to provide a container for storage or transport which may readily be assembled on site to any configuration without the use of tools, and which may be dismantled and assembled in a different configuration at the choice of the user. It is another object of the invention to provide a storage container which may be suspended from a support, e.g. an overhead rail as in a wardrobe clothes
rail, and also to provide a range of brackets useful for
this and allied purposes.

According to one aspect of the invention there is provided a
container in knock down form, comprising a kit of parts to
be assembled into the container, the kit including container
wall panels having engaging parts whereby the panels are
held together characterised in that the margins of the
panels (P) are of rod form (R) and in that separate clips
(C) are present to connect the panels (P) together, the
clips having two generally parallel channels (11) each to
receive a panel margin (R).

The term "rod" is intended to embrace any cylindrical item,
e.g. a rod, bar, tube or the like and which may be of
circular or substantially circular cross-sectional shape or
other shape which can be engaged with the separate clips
having complementary shaped channels.

The container may take the form of a bin, box, compartment
having all closed sides or at least one open side.

Most preferably the panels and the clips are formed of
synthetic resin, however the panels may be vinyl coated
wire.

In a much preferred feature, the panels are of grid form,
the bars of the grid being of the same rod form as the
margins of the panels.  It is preferred that the length of
the clips is substantially equal to the distance between
adjacent parallel bars of the grid.  Preferably, each clip
comprises an elongate body of generally E cross sectional
shape, the outer walls being rounded and the web between the
channels being shorter and thinner than the outer walls.

In a much preferred feature, the invention includes a range
of brackets, each having a channel like socket to receive a
rod of a panel, and engaging means to engage a support from
which the container may be suspended or which is suspended
from the container or to engage a structure.

In order that the invention may be well understood, it will
now be described with reference to the accompanying
diagrammatic drawings, in which

>       Figure 1 is a perspective view of a stack of storage
>       bins of the invention;
>       Figure 2 is a perspective view drawn to an enlarged
>       scale of a corner of the bin of Figure 1;
>       Figure 3 is a sectional view taken on lines III-III

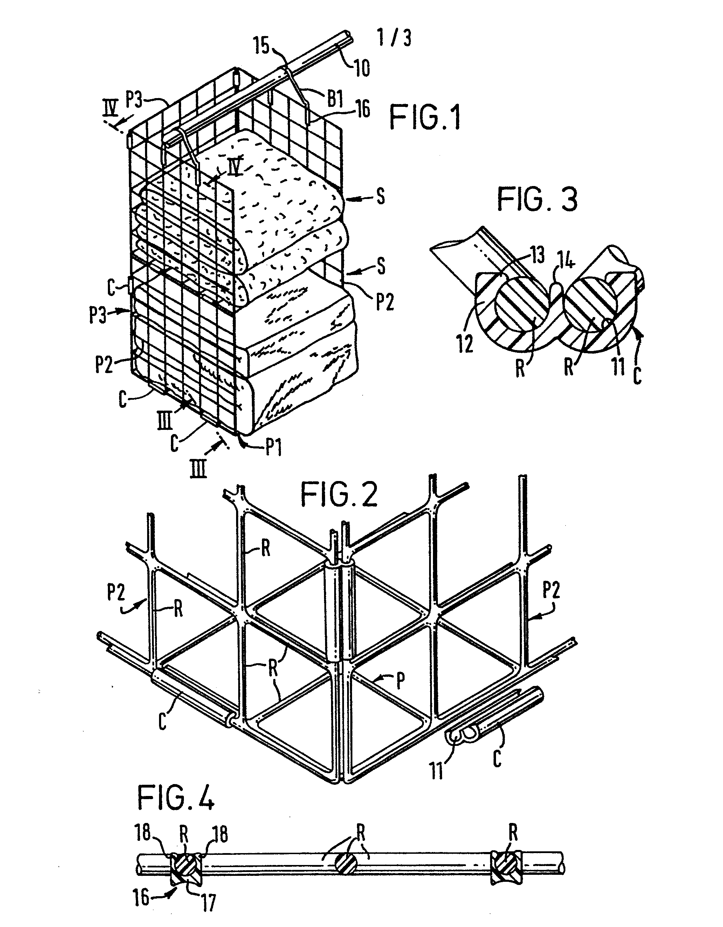

>       on Figure 1;

Figure 4 is a sectional view taken on lines IV-IV on Figure 1;

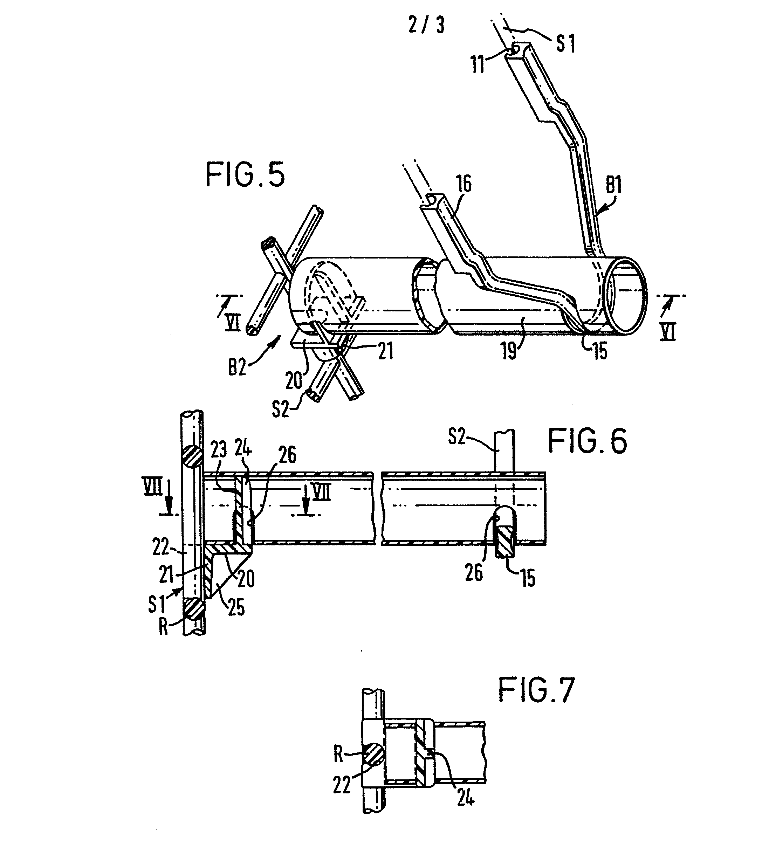

Figure 5 is a perspective view of a rod for neck ties, etc. to be suspended by brackets below a bin;

Figure 6 is a section taken on lines VI-VI on Figure 5;

Figure 7 is a section taken on lines VII-VII on Figure 6;

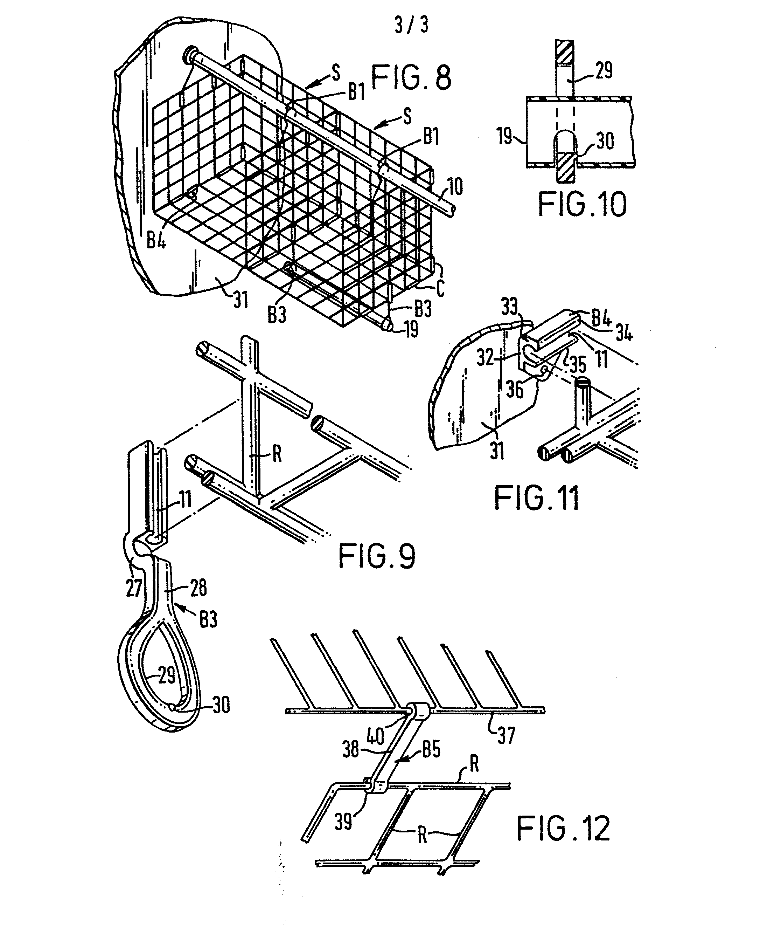

Figure 8 is another embodiment of the invention;

Figures 9, 10 and 11 show details of the embodiment of Figure 8, and

Figure 12 shows a bin suspended by a bracket from a wire shelf.


Where possible the same reference numerals are used in the different embodiments.


The embodiment of Figures 1 to 4 comprises a stack or column of open storage bins or baskets S located in a wardrobe or cubicle, the top bin being suspended from the rail 10 of circular cross-section which may be a coat hanger rail or a shower curtain rail, etc.  As shown, each bin comprises a number of panels P, namely, a bottom panel P1, two side panels P2, and a back panel P3.  Each panel is a planar generally square grid like structure, the vertical and horizontal bars and margins of which are formed of rods R of circular cross-sectional shape. The panels are formed of strong resilient plastics such as polypropylene, metal, plastics coated metal or the like. Adjacent panels are held together at their edges by clips C. Each clip is moulded of plastics and is of generally E cross-sectional shape, having two identical channels 11. The length of the clip is equal to the distance between adjacent rods R of the panel. As shown in Figure 3, each channel 11 has an outer wall 12 having a rounded top surface 13, and the channels are separated by a relatively thinner and shorter web 14. The mouth of the channels is slightly smaller than the channel itself. Each channel 11 is dimensioned to receive and engage a rod R of a panel, the rod being guided into the channel by urging outwardly the outer wall, and the rod is received in the channel as a snap fit. Although the rod R is received in a channel 11 and held snugly therein, the rod may still be pivoted with respect to the channel, which facilitates assembly of the bin. A kit of parts is supplied to the user to snap engage clips C to the margins R on three sides of one panel destined to be the bottom panel P1. (In one convenient operation the panel P1 is laid flat on say a table or floor surface and then the margin of a panel is snap fitted to the outer channel 11 of each clip C already secured to the bottom panel P1). Two adjacent panels P2, P3 are then raised vertically and clipped together at their margins. The third panel P2 is raised and clipped to the adjacent one.  It has been found preferable to engage each corner of a bin by the use of two clips C spaced apart along the margin of the panels.  If the bin is to have four sides the process is repeated for the fifth  panel.

Bins may be connected together by engaging the clips C with panel margins of adjacent bins.

The top bin is connected to the clothes hanger rail 10 by a bracket B1 of generally U shape.  The bight 15 of the bracket is shaped to straddle and engage the circular rail 10 and the free ends of the bracket B1 are each shaped as a clip 16 having a single channel 11 with a thickened base 17 and relatively thin sidewalls 18 (Figure 4) to engage a pair of the grid rods R of a panel as a snap fit.  As shown in Figure 1, two brackets B1 hold the top bin to the rail 10. In Figure 1, the bins contain folded towels or blankets. Because the panels have open sides clothes stored in the bins are well ventilated.  It is surprising how much weight can be put in the bins without the panels or clips distorting, even though they are plastics mouldings.  Up to 10 kg can be placed in a bin measuring 30 cm x 30 cm x 30 cm.

In the embodiment of Figure 5, a bracket B1 is used in association with a bracket B2 to suspend a tubular rod 19, e.g. for hanging towels, face cloths or neck ties below
bins. The bracket B1 is inverted and connected to a side
panel P2 of the bin S1 by engagement of the clips 16 at the
free ends with adjacent rods R of the grid. The bracket B2
is adapted to engage a side panel P2 of another bin S2
located alongside and below the level of the first bin. The
bracket B2 comprises a base 20 having a foot 21. A channel
shape 22 is formed in one side in the base and the foot to
engage a rod R of the side panel P2 of the bin S2 which is
present below and to one side of the first bin S1. An
upright wall 23 stands on the base 20 and has a reinforcing
sloped rib 24 and another 25 extends between the underside
of the base 20 and the foot 21. The tube 19 has two
longitudinally spaced apart recesses 26, one to receive the
wall 23 in snug engagement and the other to receive the
bight 15 of the bracket B2. The brackets are dimensioned so
that the tube 19 will be suspended generally horizontally
below the bins. In use, the bracket B2 is snap fitted to an
upright rod R of the adjacent panel P2, and the tube 19 is
brought to engage the wall 23 in one of the recesses 26.
The bracket B1 is snap fitted to the opposite panel P2 of
the first bin, and the bight 15 is received in the adjacent
recess 26. The rib 24 helps keep the bracket B2 and the rod
19 in engagement.


In the embodiment of Figure 8, two bins having a common wall are secured in side-by-side relation and both are suspended from a rail 10 by three brackets B1. A rod 19 is suspended below one bin S, the right hand bin, as shown, by a pair of brackets B3, shown in more detail in Figure 9. The bracket B3 comprises a channel section 11 from one end of which extends an offset portion 27, shaped and dimensioned to engage the rods R at the corner of a bin, and which has an extension 28 which extends in a loop portion 29. A pair of brackets B3 is suspended from opposite sides of the bin by snap fitting the channel section into engagement with a vertical rod R, the adjacent horizontal rod (or rods) being received in the portion 27. A rod 19 is fitted to the brackets B3 by urging it down on to the loop portions 29, until they are received in the respective recess 26. A dimple 30 is present on the outside of the loop portion 29 better to engage the parts together, and as shown in Figure 10.

A bracket B4 is used to steady a bin (or bins) to an adjacent wall 31. The bracket B4 has a base 32 having a channel 11 to receive a rod R of a panel P. The channel has a thicker side wall 33 having an overhang 34 and a thin opposite sidewall 35. The bracket B4 is secured to the wall 31 by a screw passed through a screwhole 36. A number of the brackets B4 may be used to secure a bin to a wall 31, in the absence of the rail 10, e.g. to make use of a blank wall.

It will be appreciated that a carrying basket may be built up of a bottom panel P1 and four side panels P2, and attaching a rod 19 to two opposite sides P2 by brackets B2 to define a carrying handle.  The bin may be used for this purpose, e.g. for tools or toys.

In the embodiment of Figure 12, a number of spaced apart brackets B5 is used to suspend a bin from a wire shelf 37. The bracket B5 comprises a web 38 having at each end an open loop 39, 40, one of which is of a larger diameter than the other.  In use, the loop 40 is looped over a rod R and then the loop 39 is looped over a wire of the shelf 37.

By virtue of the invention, the user is able to make from the kit of parts any shape of container that he wants and to dismantle that shape and build up another, all by hand.  The container may be suspended from a wall both inside and outside and which may be fixed or movable, e.g. a closet interior wall or an office door.  The kit of parts is light in weight and of low volume when collapsed making it eminently suitable for transport and storage.

Agents Ref: 1109

CLAIMS

1. A container in knock down form, comprising a kit of parts to be assembled into the container, the kit including container wall panels having engaging parts whereby the panels are held together characterised in that the margins of the panels (P) are of rod form (R) and in that separate clips (C) are present to connect the panels (P) together, the clips having two generally parallel channels (11) each to receive a panel margin (R).

2. A container kit according to Claim 1 characterised in that the panels (P) are of grid form, the bars of the grid being of the same rod form (R) as the margins of the panels.

3. A container kit according to Claim 2 characterised in that the length of the clips (C) is substantially equal to the distance between adjacent parallel bars (R) of the grid.

4. A container kit according to any preceding Claim characterised in that each clip comprises an elongate body of generally E cross sectional shape, having two parallel channels (11), the outer walls (12) being rounded (13) and the web (14) between the channels being shorter and thinner

2                           0134639

than the outer walls (11).


5. A container kit according to Claim 4 <u>characterised</u> <u>in</u>
<u>that</u> the diameter of the channels (11) is selected relative
to the diameter of the rods (R) at the margins of the panels
(P) so that the parts are engaged as a snap fit and the
margin of a panel may be pivotally moved within the
respective channel.


6. A container kit according to any preceding Claim
<u>characterised</u> <u>in</u> <u>that</u> a bracket (B1) is present to suspend
the container from a cylindrical support mounted overhead,
e.g. a clothes hanger rail (10), the bracket (B1) being of
generally U shape with the bight (15) being adapted to
engage the support (10) and each free arm being of clip form
(16) having a single channel (11) whereby the bracket (B1)
may be engaged with two rods (R) of a panel (P).


7. A container kit according to any preceding Claim
<u>characterised</u> <u>in</u> <u>that</u> a bracket (B2, B3) is present to
engage the container with a cylindrical rod (19) which is
not a support, and in that the bracket (B2, B3) comprises a
clip portion having a channel (11, 22) to be engaged with a
rod (R) of a panel (P) and a connecting portion (23,29) to
engage the rod (19).

8. A container kit according to Claim 7 characterised in that the connecting part (23, 29) of the bracket (B2, B3) is adapted to be received in and engaged with recesses (26) preformed in the rod (19).

9. A container kit according to any preceding Claim characterised in that the kit includes bracket (B4, B5) having a portion (11, 40) for a connection to a panel (P) of the container and a portion (36, 39) to engage a structure (31, 37).

10. A container kit according to any preceding Claim characterised in that the clips (C) and the brackets (B) are formed of a strong resilient plastics such as polypropylene and the panels (P) are formed of such plastics or a plastics coated wire.

11. A method of assembling a container according to any of Claims 1 to 5 characterised in that clips are engaged with at least three opposite sides of a first panel, the panel is laid flat on a substrate, e.g. a table or floor, three other panels are then engaged with the clips of the first panel, and a pair of the other panels is then raised and clipped together, followed by the raising of the third other panel and clipping that to one of the other panels to form the container.

0134639

1 / 3

FIG.1

FIG. 3

FIG.2

FIG.4

FIG.5

FIG.6

FIG.7

0134639

3/3

FIG. 8

FIG.10

FIG.9

FIG.11

FIG.12